# EUROPEAN PATENT APPLICATION

(11) **EP 1 666 811 A1**
(43) Date of publication of application: **07.06.2006**
(21) Application number: 04727915.3
(22) Date of filing: 16.04.2004
(51) Int. Cl.: F24J 2/46

(54) **FLAT SUN COLLECTOR SYSTEM**

(30) Priority: 16.04.2003 ES 200300905
(71) Applicant: Konetsu, S.L., 08011 Barcelona (ES)
(72) Inventor: TORRENS RASAL, Jose M, 08011 Barcelona (ES)
(74) Representative: Gallego Jiménez, José Fernando
(86) International application number: PCT/ES2004/000170
(87) International publication number: WO 2004/092660

(57) **Abstract**

The collectors (11) are arranged in series (12) of at least one collector in a field of flat sun collectors (11), which are in turn arranged in series with a heating or sanitary hot water installation (15). The system comprises a heat dissipator (5) arranged in parallel with part of or the entire series of sun collectors, said heat dissipator being connected to its outlet by a first conduit (13) that communicates with the inlet to the sun collectors and by a second independent conduit (14) communicating with the outlet piping (9) of the installation (15). The system can also have at least one T-shaped thermostatic valve (1) which is actuated by heat expansion and which joins the outlet end of at least one of the collectors (11) of the series (12) of collectors with the heat dissipator (5) by means of an inlet conduit (2), in addition to a retention valve (6) that is arranged in the first conduit (13) and that prevents the thermal fluid coming from the installation (15) from entering into the heat dissipator (5).

## Description

### Technical Field of the invention

The present invention relates to a system of flat solar collectors, wherein there circulates a thermal fluid and that are arranged in a series of at least one collector in a field of flat solar collectors, which in turn is in series with a heating or domestic hot water installation, partially, although not exclusively, of domestic or residential type.

### Background of the Invention

It is increasingly frequent that domestic hot water ("DHW") installations are heated by flat solar collectors, with the consequent advantages of being able to dispense with fossil fuels, of improving the general energy output and being absolutely innocuous from an environmental point of view.

Conventional flat solar collector systems usually comprise a collector field, associated in series and in parallel, wherein a liquid circulates, which may be water, which is heated by solar radiation. To improve the output, the collector coatings are currently materials selective to radiation, which permits the passage of solar radiation in one direction and not in the other, in such a way that all the radiant energy passes to the liquid. The liquid, once heated, can circulate by natural convection or by pumping to the domestic installation, wherein its energy content is consumed in the DHW or heating installation, cooling the liquid, and from where it returns at a lower temperature, to the collector field.

It therefore results that, particularly in the months of greater solar irradiation, not all the energy captured by the collectors needs to be consumed, meaning that the heat that exceeds that which should be used, especially in summer, when heating is not necessary, should be eliminated to the environment, by a process of dissipation. This is conventionally performed by accumulators and cooling devices.

In the summer months, it normally happens that the use level of the domestic installation is very low, even that of the hot water while, by contrast, it receives the maximum provision of solar energy. The excess heat concentrated in the solar collectors makes the temperature rise extraordinarily and the pressure may rise to very high levels (even above 3.5 atmospheres), which may cause the release of the safety valves and that the residual water contained in the collectors boils, as temperatures over 170°C may be reached. Therefore, the collectors suffer wear and require permanent maintenance to fill the installation with water and antifreeze, which is very awkward as its dose should be very exact and precise. This extreme precisely constitutes one of the main drawbacks of flat collector solar installations. The maintenance should also cover the bleeding of air and the fine tuning of the whole installation.

To resolve these drawbacks, normally very varied measures are resorted to, including:
1) covering the collectors with opaque surfaces, e.g. blankets in the summer months;
2) using very expensive solutions that require later maintenance and large supplementary tanks to accumulate the excess heat, with all kinds of hydraulic, electrical or automatic installations;
3) using unit heaters provided with electric fans, electric pumps, electric automatisms and valves;
4) diverting the overheated water to water-water or water-air heat exchangers, with the new inclusion of electric pumps, electrical operated valves and automatisms; and
5) the complicated, costly solution, although very widely spread in particularly hot regions such as Andalusia in Spain, of assembling mobile blinds in the solar collectors, automatically operated by sensors, servomotors and dependency on electricity supply.

Obviously solutions 2) to 5) involve the additional problems of further complicating the installation, making it depend on automatisms, and reducing their overall output, as they require additional electricity to function.

In short, it is currently necessary to have permanent maintenance by employees or fully trust in electric pumps, electric fans, electrical operated valves, automatisms, and general electrical consumptions. This is all very liable to break down, as it is only necessary for one of these elements or the electrical supply to momentarily fail for it to break down and cause subsequent eventual wear of both the installation and the collectors.

The present invention has the purpose of simultaneously revolving the previous drawbacks and problems.

### Explanation of the invention

For said purpose, the object of the present invention is a flat solar collector system, of novel concept and functionality, which is essentially characterized in that it comprises a heat dissipator, arranged in parallel with all or part of the series of solar collectors, said heat dissipator being connected at its outlet with a first duct that connects to the inlet of the solar collectors, and with a second duct that connects with the installation intake pipe or with the outlet of one of the solar collectors.

According to another characteristic of the present invention, the system comprises at least one heat seal which connects the outlet end of at least one of the collectors of the series of collectors with the heat dissipator, via an inlet duct, meaning that the system basically makes use of the circulation not forced by fluid pump, but exclusively by gravity or thermosiphon.

Particularly, it has been provided that said heat seal is a thermostatic T-shaped valve, of non-electric operation, but exclusively by thermostatic dilatation.

In accordance with another characteristic of the present invention, particularly provided for the cases of pump-circulation installations, the solar collector system comprises a check valve, arranged in the first duct, which prevents the intake of thermal fluid from the installation in the heat dissipator.

According to a first variant of the present invention, said heat dissipator is comprised, at least partially, of the support structure of the solar collectors.

Preferably in this case, the heat dissipator can comprise a first hydraulic collector, which connects hydraulically with the outlet of the series of solar collectors, and a second hydraulic collector, which connects the inlet and outlet of the series of solar collectors hydraulically.

Said first hydraulic collector and said second hydraulic collector of said heat dissipator can be joined hydraulically by at least one connecting pipe.

Preferably, it will comprise a plurality of said connecting pipes, each solar collector of the series having associated at least one of said connecting pipes.

It has been provided that the first hydraulic collector is a pipe arranged on the upper rear part of the solar collectors and connected thereto and, the second hydraulic collector is a pipe arranged in the lower rear part of the solar collectors and connected thereto.

According to a preferred embodiment, the connecting pipes are curved so that they are arranged in different, corresponding theoretical planes that form a certain angularity with the solar collectors, all adapted so that, in the assembly operating position of the collectors, the connecting pipes can rest on the horizontal surface to support the collectors.

Preferably said heat dissipator is made of stainless steel, because of its mechanical and corrosion resistance.

In an alternative variant, said heat dissipator comprises at least one ribbed pipe in parallel with the series of solar collectors.

In another variant, said heat dissipator can comprise a heat radiator.

People skilled in the art will appreciate, thanks to the new and inventive characteristics of the invention, that the system object thereof can resolve the problems and drawbacks of the current art, stated at the start. Specifically, the solar collection system according to the invention does not require supplementary tanks, nor additional installations or additional electrics, such as pumps or fans. The additional fact that it does not require automatisms either contributes to less breakdowns arising. Furthermore, it does not require additional electrical consumption, meaning that, as people skilled in the art will appreciate, the overall energy output increases with respect to the conventional current solar collector systems.

### Brief description of the drawings.

Below, a description will be made of the preferred embodiments of the present invention, for the better understanding whereof, drawings are attached, given merely by way of non-limiting example, wherein:
Fig 1. is an operational an functioning diagram of a solar collector system according to the prior art, applied to a DHW or heating consumption installation;
Fig 2 is an operational an functioning diagram of a solar collector system according to the invention, applied to a DHW or heating installation, in the normal operating conditions of the installation, wherein the system of the invention is not in operation;
Fig 3 is a similar diagram to that of Fig. 1, in normal operating condition and with the system according to the invention in functioning conditions:
Fig 4 is a diagram similar to that of Fig 1, in breakdown conditions or stoppage of the installation circuit circulation pump.
Fig 5 is a diagrammatic, perspective view that illustrates a first possible variant of the solar collector system of the present invention; and
Fig 6 is a diagrammatic, perspective view that illustrates a second possible variant of the solar collector system of the present invention

### Detailed description of the drawings

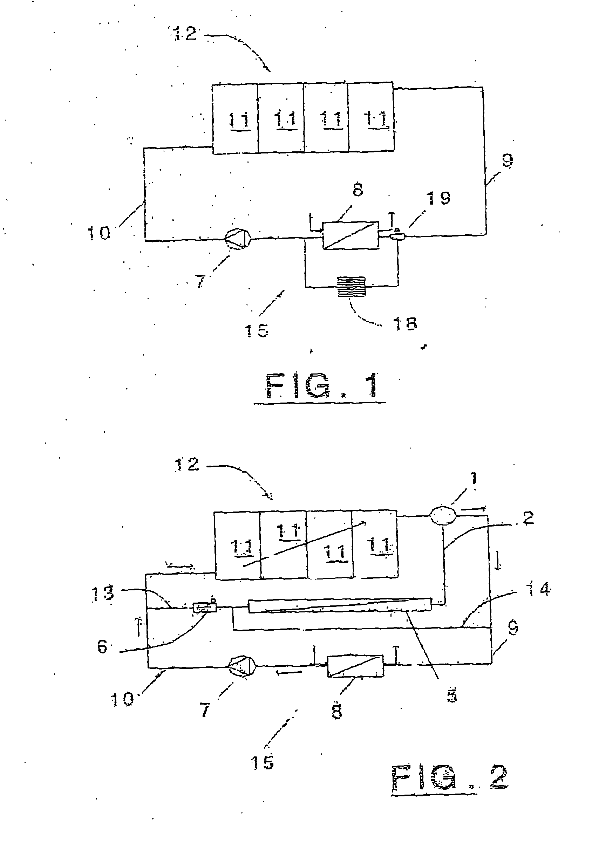

Fig. 1 is an operational an functioning diagram of a solar collector system according to the prior art, applied to a DHW or heating consumption installation 15. It comprises a field 12 of solar collectors 11, wherein there circulates a thermal fluid, in particular water. In this example, the solar collectors 11, e.g. flat solar collectors, are arranged in a single series 12 of collectors 11, determining what in the state of the art is known as a "collector field". It is also possible to have collector fields with more series of collectors, in parallel with the other series or in consecutive "series of series". From the set of collectors stems the intake pipe 9, which will normally be a fall-pipe, to supply the installation 15. The return will be performed by the downstream installation 15 return pipe 10 and the pump 7.

The diagram of Fig. 1 shows that the conventional DHW or heating installation 15 has energy consumption 8, that may be taps of the DHW installation, with water consumption, or the heating radiators, without water consumption. The water returns cooled to the solar collectors 11 through a pump 7. For the cases wherein an overheating of the water occurs, due to the combination of a large accumulation of heat by radiation, the conventional installation requires an accumulating device or heat dissipator 18, which may be an aerotherm, in parallel with the installation 15, a device which is governed by a thermostatic electrically operated valve 19.

Fig. 2 shows the operational an functioning diagram of a system of solar collectors according to the invention applied to the DHW or heating consumption system of Fig. 1, in the normal operating conditions of the installation, wherein the system of the invention is not functioning. In this case, observe that the accumulating or dissipating device 18 has been dispensed with.

In this point we should distinguish two cases of overheating: 1^{st} due to excess solar irradiation with respect to heat demand of the installation 16; and 2^{nd} due to failure of the electric pump 7 of the installation.

To resolve the first case, the system of figure 2 comprises a heat dissipator 5, arranged in parallel with the series 12 of solar collectors 11 and in series-parallel with the installation 15. The heat dissipator 5 of the invention is connected at its inlet with the outlet of the last solar collector 11 via a thermostatic T-shaped valve 1, totally free from electrical actions that, furthermore permanently connect it to the intake pipe 9.

From the heat dissipator 5 outlet stem two ducts 13 and 14. The first duct 13 connects to the inlet of the solar collectors 11, in the final part of the return pipe 10, and it has interposed a check valve 6, which prevents the intake in the heat dissipator 5 of the thermal fluid from the installation 15, the second duct 14 is independent from the first duct 13 and connects to the intake pipe 9 of the installation 15.

When the temperature of the water exiting the last collector 11 is lower that a predetermined minimum, as is the case of Fig. 1, the output water will directly circulate exclusively towards the intake pipe 9, going to the consumption installation 15, and returning to the solar collectors 11 driven by the pump 7, following the path indicated by the arrows.

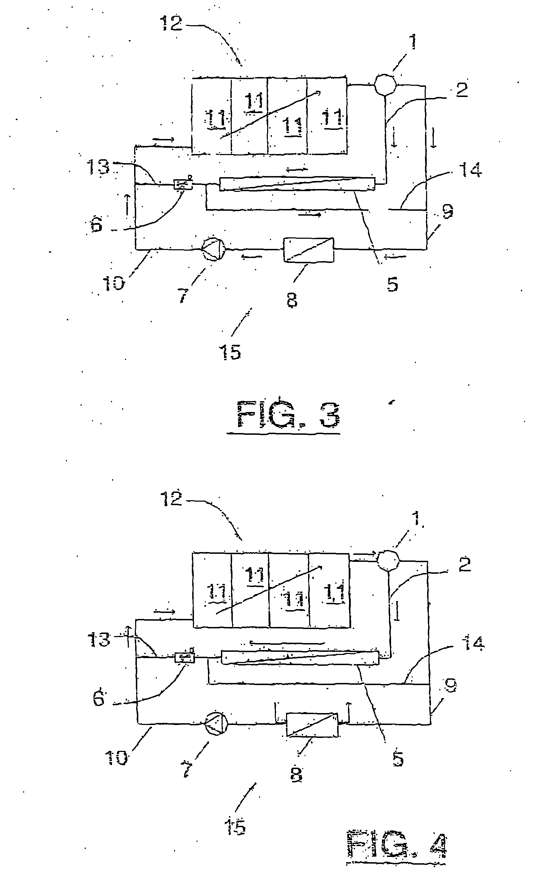

When the temperature of the water exiting the last solar collector 11 exceeds said minimum predetermined temperature, due to the high solar radiation or low heat consumption of the installation 15, there may be excessive heating of the water and heat dissipation may be required. In these circumstances, the thermostatic T-shaped valve opens and lets the water pass through to the heat dissipator 5 of the invention and a water circulation established in Fig. 3 is established.

In this case, part of the water circulates through the heat dissipator 5, wherein it cools due to the effect of heat exchange with the room air and returns partially to the intake pipe 9 through the second duct 14.

The equilibrium of flows to the ducts is established automatically, in accordance with the thermal requirements of the installation 15, with water consumption therein and with the accumulated heat in the solar collectors 11.

In the second case of overheating, this is in the event of breakdown of the pump 7, as well as also the breakdown or fault of the electric fluid, no water will flow through the installation 15, and instead by gravity or thermosiphon, and the fluid path of the water will be that of the arrows of Fig. 4, i.e, through the solar collectors 11, the duct 2, the dissipator 5, the check valve 6, the pipe portion 13 and again towards the solar collectors 11.

The hydraulic circuit of the drawings may be completed with other conventional measuring or safety devices, e.g. air bleeders (not represented).

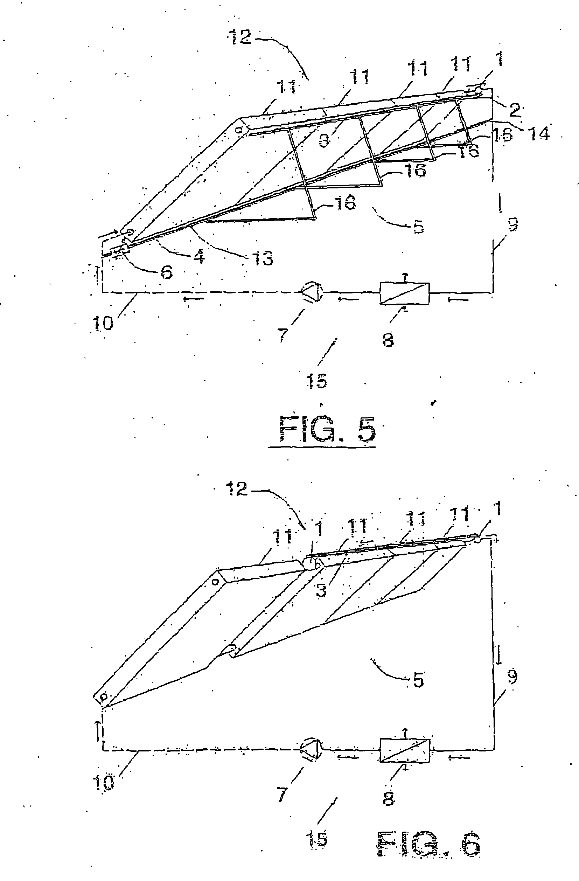

Figs 5 and 6 represent different examples of embodiment of the invention, wherein said heat dissipator 5 is comprised, at least partially, by the support structure of the solar collectors 11.

Specifically, the collector support structure of the system of Fig. 5, formed in this case by four flat collectors 11, typically arranged with a certain angularity with respect to the horizontal plane, is comprised of an upper pipe 3 and a lower pipe 4, joined by connecting pipes. The upper pipe is a first hydraulic collector 3, that hydraulically connects to the outlet of the last collector 11 of the series 12 of solar collectors, while the lower pipe is a second hydraulic collector 4, which hydraulically connects to the inlet and outlet of the series of solar collectors 11, by the first 13 and second 14 duct, which are the final and start ends, respectively, of the second collector 4.16.

Inside the pipes 3, 4 and 16, water circulates from the three-way thermostatic valve 1 and the downstream end of the first pipe 3 corresponds to said inlet duct 2. The connecting pipes 16 hydraulically join the hydraulic collectors 3 and 4. The diameter and total length of the pipes 3, 4 and 16 are dimensioned so that the necessary heat dissipates in accordance with the dimensions and number of solar collectors 11. In this way, the set of collectors 3, 4 and connecting pipes 16 comprise the heat dissipator of the present invention.

In the example illustrated, each solar collector 11 has associated a corresponding connecting pipe 16. The hydraulic collectors 3 and 4 are preferably made of stainless steel, black painted or galvanized iron and are joined to the collectors 11, by conventional joining means. On the other hand, the connecting pipes 16, which are also preferably made of stainless steel or black painted or galvanized iron, are curved or L-welded, so that they are arranged in directions and corresponding theoretical planes that form a certain angularity with the solar collectors 11, in the case of the drawings perpendicular thereto and to the horizontal. In this way, in the assembly operating position of the collectors 11 (Fig. 5), the connecting pipes 16 rest on a horizontal surface, e.g. a roof or cover, to support the collectors 1.

Due to the lower density of hotter water, this latter tends to be stratified and circulate through the upper part, both of the solar collectors 11, and the first hydraulic collector 3, in the event that it is necessary to increase the calorific value of dissipation, it is convenient to increase the heat exchange surface precisely in this highest portion of the system, in this first hydraulic collector 3, either increasing its section, giving it ribs or mounting another smooth or ribbed pipe in parallel.

Thus, the ideal solution for any existing solar energy installation, in particular when the solar collector field is of the type which is fitted in the roof, consists of mounting a dissipator comprised of a horizontal battery of ribbed copper pipes 17 equipped with a seal or thermostatic T-shaped valve 1 at each end and placed just above the upper frame of the solar collector or collectors 11, as indicated in Fig. 6. In this case, it can dispense with the check valve 6, in the specific example that has been represented in Fig. 6, a second thermostatic T-shaped valve 1 has been positioned between the first and second collector 11 of the series 12.

A variant of the example of Fig. 6 may consist of a ribbed pipe arranged directly on a duct between the three-way thermostatic valve 1 and the first duct 13, with a second duct 14 in parallel with the ribbed pipe 17 between the outlet thereof and the intake pipe 9. In this case, the support structure may also be a conventional support structure.

Other embodiments are also possible of the heat dissipator 5, such as, for example, a heat radiator, as well as the association of different types of air-water exchanger.

Obviously, within the scope of the invention, many variants are possible, provided that they are included within the scope of the following claims. Thus, for example, furthermore, there may have been interposed at the outlet of each collector 11 of the series 12 a seal of thermostatic T-shaped valve 1 interposed between two consecutive collectors, or between the last collector of the series and another T-shaped valve whose third branch will connect to another inlet duct 2 to the heat dissipator 5. Furthermore, said first duct 13 may also outpour into the inlet of an intermediate solar collector 11, different from the first, or at a point of a solar collector 11 other than the point at which the flow from the installation is received.

## Claims

1. Flat solar collector system, wherein there circulates a thermal fluid and which are arranged in series (12) of at least one collector on a flat solar collector field (11), which is in turn in series with a heating or domestic hot water installation (15), **characterized in that** it comprises a heat dissipator (5), arranged in parallel with all or part of the series of solar collectors, said heat dissipator being connected at its outlet to the first duct (13) which connects to the inlet of the solar collectors, and with a second duct (14) which connects to the intake pipe (9) of the installation (15) or with the inlet of one of the solar collectors.

2. Flat solar collector system, according to claim 1, **characterized in that** it comprises at least one heat seal (1) which joins the outlet end of at least one of the collectors (11) of the series (12) of collectors with the heat dissipators (5), through an inlet duct (2).

3. Flat solar collector system, according to claim 2, **characterized in that** said heat seal is a thermostatic T-shaped valve (1), actuated by heat dissipation.

4. Flat solar collector system, according to claim 2 or claim 3, **characterized in that** it comprises a check valve (6), arranged on the first duct (13), which prevents the intake in the heat dissipator (5) of the thermal fluid from the installation (15).

5. Flat solar collector system, according to any of the preceding claims, **characterized in that** said heat dissipator (5) is comprised, at least partially, of the support structure of the solar collectors (11).

6. Flat solar collector system, according to claim 5, **characterized in that** said heat dissipator (5) comprises a first hydraulic collector (3), which connects hydraulically to the outlet of the series (12) of solar collectors (11), and a second hydraulic collector (4), that connect the inlet and outlet of the series of solar collectors hydraulically.

7. Flat solar collector system, according to claim 6, **characterized in that** said first hydraulic collector (3) and said second hydraulic collector (4) of said heat dissipator (5) are hydraulically connected by at least one connecting pipe (16).

8. Flat solar collector system, according to claim 7, **characterized in that** it comprises a plurality of said connecting pipes (16), each solar collector (11) of the series (12) having associated at least one of said connecting pipes (16).

9. Flat solar collector system, according to claim 6 or claim 7, **characterized in that** the first hydraulic collector (3) is a pipe arranged on the rear upper part of the solar collectors (11) and connected thereto and **in that** the second hydraulic collector (4) is a pipe arranged in the lower rear part of the solar collectors (11) and joined thereto.

10. Flat solar collector system, according to one of claims 6 to 9, **characterized in that** the connecting pipes (16) are curved so that they are arranged in different, corresponding theoretical planes that form a certain angularity with the solar collectors (11), wherein, in the operating assembly position of the collectors, the connecting pipes may rest on a horizontal surface to support the collectors.

11. Flat solar collector system, according to any one of claims 5 to 10, **characterized in that** said heat dissipator (5) is made of stainless steel.

12. Flat solar collector system, according to any of the preceding claims, **characterized in that** said heat dissipator (5) comprises at least one ribbed pipe (17), arranged in parallel with the series (12) of solar collectors (11).

13. Flat solar collector system, according to any of the preceding claims, **characterized in that** said heat dissipator comprises a heat radiator.
